# EUROPEAN PATENT APPLICATION

(11) **EP 3 062 519 A1**
(43) Date of publication of application: **31.08.2016**
(21) Application number: 15156915.9
(22) Date of filing: 27.02.2015
(51) Int. Cl.: H04N 21/41, H04N 21/422, H04N 21/81, H04N 21/435, H04N 21/436, H04N 5/225, H05B 37/02

(54) **Ambient surround information system for a media presentation**

(71) Applicant: Novabase Digital TV Technologies GmbH, 82031 Grünwald (DE)
(72) Inventor: PAULI, Michael, 04105 Leipzig (DE)
(74) Representative: Maiwald Patentanwalts GmbH

(57) **Abstract**

The invention relates to an ambient surround information system comprising a controller and an optical ambient information interface, wherein the controller is adapted for controlling a first video information channel, a second audio information channel and a third optical ambient information channel of a multimedia device for a respective first, second and third track of a media presentation. The optical ambient information interface is adapted to be coupled to an illumination device and for providing controlling information for a plurality of controllable illumination units. The controller is adapted for controlling the third information channel via the optical ambient information interface based on the optical ambient information of the third track of the media presentation. The invention further relates to an illumination device and a recording device for recording a media presentation for an ambient surround information system.

## Description

### Field of the invention

The invention generally relates to multimedia systems. In particular, the invention relates to an ambient surround information system for a media presentation, an illumination device and a recording device for recording a media presentation.

### Background of the invention

Modern multimedia systems predominantly focus on providing an enhanced image quality and improved audio quality, for example by applying high definition technology and different surround technologies. Such features help to create a more authentic atmosphere, especially for a TV viewer who is receiving the impressions of a film or series. In general, modern multimedia systems aim at creating an atmosphere for a potential TV viewer which gives the viewer a more realistic feeling of the film sequences or film scenes. For example, three-dimensional films may improve the visual illusion of depth perception. Additional surround sound systems may further support the acoustic perception of the viewer. To provide an enlarged appearance of the screen it is known from TV sets to provide an ambient light corresponding to that what is visible on a screen, wherein the ambient light takes the color content of the screen at the edge and illuminates the margin around the screen correspondingly. This can be considered as an enlarged screen without any additional information. Further from US 2014/0104497 video files including ambient light effects are known, which however do not show any surround effect. Further ambient light aspects are described in US 8,928,811, US 2009/0175536, US 8,063,992, US 2015/0002720, US 2014/0313403 and US 2007/0242064.

### Summary of the invention

It is an object of the present invention to provide an improved multimedia system.

This object is achieved by the subject-matter of the independent claims. Further exemplary embodiments are evident from the dependent claims and the following description.

According to an aspect of the present invention, an ambient surround information system for a media presentation is provided. The system comprises a controller and an optical ambient information interface. The controller is adapted for controlling a first information channel of a multimedia device for video information on a first track of the media presentation, a second information channel of a multimedia device for audio information on a second track of the media presentation and a third information channel of a multimedia device for optical ambient information on a third track of the media presentation. The optical ambient information interface is adapted to be coupled to an illumination device of a multimedia device and is adapted for providing controlling information for a plurality of controllable illumination units of said illumination device. The controller is adapted for controlling the third information channel via the optical ambient information interface based on the optical ambient information of the third track of the media presentation.

Thus, it is possible to provide a system with independently controllable illumination unit or units, e.g. lamps, wherein the illumination units are controlled based on the optical ambient information. The optical ambient information may comprise information about a brightness and/or a color of light. This optical ambient information may represent a light distribution of an environment. For example, this information is representative for an intended ambient light situation relating to the meaning content of a movie or for an ambient light in the environment during a recording procedure, for example at a movie set. In this manner, a more realistic atmosphere or more authentic impressions and moods of an environment can be transferred from a movie set into a living room of a person watching a movie or into a cinema. It is also possible to give the user an impression on the situation by way of the ambient surround light, although the visual content of the video does not include any hint on the situation. For example the set of the video content is an indoor set, wherein the virtual time is a morning time. Although the indoor video content does not give any information on the outside light situation, the morning time mood can be provided by the third channel, by way of an ambient surround light. This is achieved by adapting the light emissions of the illumination units based on the optical ambient information.

The illumination unit may comprise a lamp. The lamp may be located inside a room, e.g. on a wall, the floor or the ceiling. The brightness and/or the color of the illumination unit may be controlled based on the optical ambient information. A plurality of illumination units may thus illuminate a room, for example a living room in which a TV viewer (television viewer) watches a movie, such that an illumination throughout the room can be adapted based on the optical ambient information. The controller for controlling the three channels may be realized by a plurality of integrated devices, e.g. integrated devices are each specified for one of the video, audio or optical ambient information. The illumination unit of an ambient illumination device may be a lamp, a display or a projector, or even a pixel or pixel group of a display or a pixel or pixel group of a projector.

The system may further comprise a combined interface for video information, audio information and optical ambient information including the optical ambient information interface. For example, the combined interface may be an HDMI-interface (High Definition Multimedia Interface) or an enhanced HDMI interface (EHDMI). Thus, the optical ambient information can be transmitted in combination with video information and audio information.

The media presentation may comprise or be stored on a storage medium. In particular, the media presentation comprises the optical ambient information, the video information and the audio information. The optical ambient information, the video information and the audio information and hence the whole media presentation may be stored on a storage medium. The storage medium may be a server of a sevice provider, wherein the media presentation may be streamed to the user. However, the different information is each stored on different logical tracks of the storage medium. The information can then be transferred to the ambient surround information system such that the controller controls the information provided to the interface, for example to the optical ambient information interface. By way of this interface the optical ambient information can be provided to the illumination units which are controlled based thereon.

According to an embodiment of the invention, the controller is adapted for controlling the third information channel via the optical ambient information interface based on the optical ambient information for a plurality of ambient regions.

The plurality ambient regions means for example two ambient regions. Plurality of ambient regions may also mean an array of ten or more ambient regions. Each ambient region may be represented by at least one light source, wherein a light source may be a lamp, a display, a projection or the like. The ambient regions may be located at predetermined areas within a room. However, the ambient regions may be defined by virtual planes providing basis for determining the position of respective illumination units illuminating the room. For example an ambient region is defined by a wall of the room. In this manner, it is possible to determine the position of the illumination units such that the controller may control, e.g. provide information to the illumination units by way of the determined position of the illumination units. Therefore, the different ambient regions may provide a basis for controlling the different illumination units and the optical ambient information can be delivered to the respective illumination units such that light distribution is achieved which is similar or equal to the movie set, where the optical ambient information was generated or the intended ambient surround light situation.

According to another embodiment of the invention, the optical ambient information relates to a meaning content of the media presentation.

Thus, the atmosphere or the mood of a movie can be communicated to a user of the ambient surround information system in an effective manner. In particular, the illumination units may be controlled based on the optical ambient information in a way that a distinct mood or atmosphere of the movie can be read out of the content of the media presentation and therefore enhances the authenticity when watching the movie. The user may be a TV viewer.

According to another embodiment of the invention, the system comprises an illumination feedback interface for an illumination sensing device. The illumination feedback interface is capable of collecting sensed illumination information of a plurality of ambient regions. The controller is adapted to control the third channel via the optical ambient information interface additionally based on the collected sensing information.

Thus, a feedback comprising information about a brightness or color of an illumination, for example in the room, can be provided such that the controller may feedback control the brightness or color of the illumination of each illumination unit. In this manner, the illumination can be adapted taking into account an actual light distribution within the room, either from the illumination units or from other light sources not belonging to the multimedia system. It should be noted that the ambient surround information system is described for a room in which the illumination units are attached. However, it is possible that the system can be applied at other suitable locations, for example in a cinema or outdoor locations.

The light distribution in the room can be determined by different sensors and optical detectors. In particular, the sensed illumination information may comprise information about the light distribution or about the color or intensity of the illumination. After sensing the illumination, the controller may control the third channel via the optical ambient information interface, thus adapting the illumination generated by the illumination units based on the sensed illumination information. Moreover, it is possible that the illumination units are independently controlled for adjusting a suitable illumination based on an actual sensed illumination. In other words, the actual illumination is controllably adapted until an illumination is established which represents the actual meaning content of the media presentation, e.g. a movie. The feedback control may also consider a change of the light situation from those light sources not belonging to the multimedia system. If the controller adapts the ambient surround light considering a daylight influence, as for example the room where the user watches TV, the controller may successively adapt the ambient surround light when the daylight impact changes, i.e. during dusk and dawn.

According to another embodiment of the invention, the ambient surround information system, which may also be called system, further comprises a network controller which is adapted to communicate via the optical ambient information interface and the illumination feedback interface with a plurality of other illumination devices. The ambient surround information system is adapted to provide the sensed illumination information via the network controller to said plurality of illumination devices each having at least one illumination unit, an optical ambient information interface, an illumination sensing unit, an illumination feedback interface and a network controller. Of course also units only having an illumination unit without a sensor can be implemented. In this case no feedback takes place from such units. The system is also adapted to control said plurality of illumination devices based on the sensed illumination information. The illumination feedback interface may be implemented into the optical ambient information interface.

In this manner, it is possible to allocate the illumination information to respective illumination units. It is possible to provide the illumination information which are collected by the illumination interface to the illumination devices and hence also to the illumination units. Each of the illumination devices may comprise an illumination sensing unit such that each of the illumination devices is adapted to adjust an illumination based at least partly or only on the illumination information sensed by this illumination device. In other words, an illumination device may collect illumination information which is obtained by a central illumination sensing unit and/or illumination information which are obtained by the respective illumination sensing unit of the illumination device.

The illumination sensing unit may be located at an ambient region and/or in a region of the illumination unit of the respective illumination device. The central illumination sensing unit may be located within a room and therefore may be separated from the illumination devices. The ambient surround information system may be calibrated based on the sensed illumination information, for example for example during a first installation of the system.

According to another embodiment of the invention, the optical ambient information includes optical ambient information for at least five or six ambient regions. The ambient regions are arranged, seen from a user, to the left, to the right, to the bottom, to the top, in the rear and optionally in the front, so that the entire ambient has a cube like structure. The front region may be left out, in particular in case of a large video presentation. It should be noted that the ambient regions may correspond to real room walls. In this case the illumination units may be directly attached to the walls, the floor and the ceiling. The ambient regions may also be virtual planes. In this case the illumination units may be hung or may be attached indirectly to the walls by spacers or arms or just cables from the ceiling. The illumination units may also be floor standing devices even for the side ambient regions, e.g. in form of floor standing illumination units being positioned on a pin, so that the illumination unit as such is in a desired height. Such illumination devices may be mobile. The user may within some minutes position a hand full of floor standing illumination devices around the multimedia device. In case of use of a feedback unit, either a central one or feedback units in each illumination device, the system may automatically calculate the required controlling of each illumination device in order to achieve the best possible perception. After having finished the viewing, the user may store the illumination units within some minutes in a storing room. It should be noted that also already available lamps in the room may be implemented into the ambient surround light situation.

The ambient regions may for instance be defined by the walls, the floor and the ceiling of a room. However, the illumination devices may be attached to the walls, the floor and the ceiling of a room such that an illumination by the illumination devices, e.g. illumination units within the room can be adapted based on illumination information or on optical ambient information which may be different for each of the ambient regions. For example, the different optical ambient information may be allocated to the different ambient regions, such that every ambient region may be provided with a distinct optical ambient information based on which the illumination devices can be controlled. In this manner, a realistic representation of the environment, especially the atmosphere during a movie set can be brought into room of the TV viewer.

According to another embodiment of the invention, each of the ambient regions includes at least nine ambient sub-regions arranged in an at least 3x3 matrix.

Thus, a higher resolution of the optical ambient information is possible because more optical ambient information may be allocated to more different ambient regions. The optical ambient information may be stored on the storage medium, wherein a plurality of optical ambient information can be stored such that optical ambient information of different ambient regions is stored separately.

According to another embodiment of the invention, the controller is adapted to match a resolution of the optical ambient surround information to the available resolution of the illumination pixels/units, either by upscaling or downscaling the optical ambient surround information.

However, the resolution of the provided optical ambient information may differ from the available illumination pixels such that an adaption of the resolution dependent on the available illumination pixels is available. If for instance three optical illumination information is available, but only two illumination pixel, e.g. illumination units, an adaption can be conducted by the controller such that the illumination distribution best represents the optical illumination information, e.g. the original illumination distribution. For example, average values can be determined based on the optical illumination information such that the illumination generated by the illumination devices can be controlled based on these average values. This adaption may also consider the actual position of the illumination units in the room. In other words, the system may receive from the feedback unit a sensing information of the locally distributed ambient surround light, and may based thereon and based on the intended illumination adapt the available illumination units.

The system may be a part of a high definition multimedia device.

According to an aspect of the invention, an illumination device is provided. The illumination device comprises a plurality of controllable illumination units and an optical ambient information interface. The optical ambient information interface is adapted to receive controlling information for the plurality of controllable illumination units from an ambient surround information system, for example from the above described ambient surround information system. The illumination device is adapted to control the plurality of illumination units based on the controlling information received from the ambient surround information system.

The illumination device may comprise a lamp, a display or a projector, or even a pixel or pixel group of a display or a pixel or pixel group of a projector. The illumination device may communicate with an external network controller, for example the network controller of the ambient surround information system. In particular, the illumination device is adapted to receive the controlling information from the network controller of the ambient surround information system by means of wireless data transfer. A wireless system provides the advantage that the illumination devices may be integrated, for example everywhere within a room, and no data lines are required in order to provide the controlling information to the illumination devices. This also facilitates the installation of the illumination devices.

According to another embodiment of the invention, the illumination device comprises at least one sensing device and an illumination feedback interface. The sensing device is adapted for sensing illumination information of a plurality of ambient regions. The illumination feedback interface is adapted to provide the sensed illumination information to the ambient surround information system so as to allow the ambient surround information system to control the plurality of illumination units on the sensed illumination information. The illumination feedback interface may be implemented into the optical ambient information interface.

Thus, illumination information from light sources throughout the room can be used in order to control the illumination units. For example, the light which is emitted from a television located inside the room can be taken into account when controlling the illumination units. In other words, the illumination provided by the illumination units can also be adapted to the arrangement or orientation of other light sources within the room, especially to the location and/or orientation of the television. The illumination is thus adjustable dependent on the location of the illumination units and/or dependent on the location of other light sources, thereby further enhancing the light distribution generated by the illumination units.

According to an aspect of the invention, an illumination device is provided. The illumination device comprises least one controllable illumination unit, an optical ambient information interface, an illumination sensing unit, an illumination feedback interface and a network controller. The network controller is adapted to communicate via the optical ambient information interface and the illumination feedback interface with ambient surround information system and other illumination devices. The optical ambient information interface is adapted to receive controlling information for the at least one controllable illumination unit from an ambient surround information system. The illumination sensing unit is adapted for sensing illumination information of at least one ambient region allocated to the respective one of the at least one controllable illumination unit. The illumination feedback interface is adapted to provide the sensed illumination information to an ambient surround information system and other illumination devices having at least one illumination unit, an optical ambient information interface, an illumination sensing unit, an illumination feedback interface and a network controller so as to allow an ambient surround information system to control a plurality of illumination devices based on the sensed illumination information. The illumination device is adapted to control the at least one illumination unit based on the received controlling information from the ambient surround information system and on received illumination sensing information and from the other illumination devices. It should be noted that the illumination device may not only communicate with the ambient surround information system as such, but may also communicate with other illumination devices, so that information can be exchanged via a data bus. The illumination device may take over some controlling functions of the ambient surround information system.

The network controller may be a central unit which is implemented into the ambient surround information system. The data transfer, e.g. the transfer of the controlling information may be conducted by means of a wireless data connection. The network controller is adapted to receive the sensed illumination information from the illumination devices such that the network controller can control the at least one controllable illumination device based on the sensed illumination information. However, the network controller may further be adapted to control a plurality of illumination devices independently by sending different control signals to the plurality of illumination devices. In this manner, each of the plurality of illumination devices can be controlled individually based on the sensed illumination information of the respective illumination devices. The illumination feedback interface may be implemented into the optical ambient information interface.

According to an aspect of the invention, a recording device for recording a media presentation for an ambient surround information system is provided. The recording device comprises at least one video recording unit having at least one predetermined recording direction and at least one optical ambient surround information recording unit having at least one predetermined recording direction. The predetermined recording direction of the optical ambient surround information recording unit is different from the predetermined recording direction of the video recording unit. The video recording unit is adapted to generate a video information of the media presentation and to store the video information in a first information track of the media presentation. The optical ambient surround information recording unit is adapted to generate an optical ambient surround information of the media presentation and to store the optical ambient surround information and the predetermined recording direction in a third information track of the media presentation. Accordingly the audio information may be stored on the second track, in particular if original audio information is recorded.

In this manner, it is possible to not record only information about the light distribution in front of the camera, but also the ambient light of the environment of a movie set, for example in direction which are not covered by view field of the camera. Therefore, the optical ambient surround information may differ from the video information. In particular, the optical ambient surround information may represent a mood or an atmosphere of the environment of the movie set. By separately storing the optical ambient surround information and the video information on different tracks, it is possible to separately read this different information out, for example by the controller of the ambient surround information system.

According to an embodiment of the invention, the recording device further comprises at least one audio recording unit having a predetermined recording direction, wherein the audio recording unit is adapted to generate an audio information of the media presentation and to store the audio information in a second information track of the media presentation.

Thus, in addition to the optical ambient surround information and the video information the audio information can be provided and read out by the controller in order to play a movie on a television which requires at least the video and audio information. Based on the optical ambient surround information, a further feature is added to the video and audio information. This is achieved by using the ambient surround information system such that besides the audio and video information, the optical ambient surround information can further influence the perception of the TV viewer by means of the ambient light, e.g. illumination generated by the illumination devices. Since the optical ambient surround information comprise information about the atmosphere and the mood during the movie set, a more realistic light distribution can be achieved by illuminating the room in which the TV viewer watches the movie. This illumination which is provided by the illumination devices can vary dependent in the content that is shown in the movie. For example, a sunset can be simulated by adapting the illumination colors of the illumination devices such that the room is illuminated with orange or red color. Moreover, the intensity of the illumination may vary from illumination device to illumination device.

According to another embodiment of the invention, the recording device further comprises a plurality of optical ambient surround information recording units each having a predetermined recording direction. Each of the optical ambient surround information recording units is adapted to generate a respective optical ambient surround information of the media presentation and to store the optical ambient surround information and the corresponding predetermined recording direction of each of the optical ambient surround information recoding units in the third information track of the media presentation.

For example, each of the recorded optical ambient surround information can be allocated to a certain direction. This direction information may then be stored in the third track such that, when reading the third track out by the controller of the ambient surround information system, the direction information can be allocated to different ambient regions. In other words, the direction information of the optical ambient surround information is allocated to the respective ambient regions such that the illumination devices may reproduce the light effects, e.g. the light distribution from the movie set, within the room of the TV viewer. The allocation of the optical ambient surround information may be conducted when it is stored in the third track and/or when it is read out by the controller.

According to another embodiment of the invention, the optical ambient surround information of the third track of the media presentation is coded so as to provide an added value pay service.

Thus, it may be possible that a potential user of the ambient surround information system has to activate the feature of providing the optical ambient surround information to the illumination devices. In other words, the third track can only be read out by the controller if this feature is activated, for example if the user pays a fee for using this feature. It is also possible to provide a certified controller and to cipher the information of the third track in a way, that only certified controller can decipher the information.

### Brief description of the drawings

Fig. 1 shows an ambient surround information system for a media presentation according to an embodiment of the invention.
Fig. 2 shows an ambient surround information system with a plurality of illumination devices according to an embodiment of the invention.
Fig. 3 shows an illumination device with a plurality of illumination units and sensing units according to an embodiment of the invention.
Fig. 4 shows three illumination devices communicating with an optical ambient information interface according to an embodiment of the invention.
Fig. 5 shows a multimedia environment with an ambient surround information system according to an embodiment of the invention.
Fig. 6 shows ambient regions according to an embodiment of the invention.
Fig. 7 shows an allocation of ambient regions to a third track of a storage medium according to an embodiment of the invention.
Fig. 8 shows an allocation of ambient sub-regions to a third track of a storage medium according to an embodiment of the invention.
Fig. 9 shows an allocation of video information, audio information and optical ambient information to respective tracks of a storage medium according to an embodiment of the invention.
Fig. 10 shows a recording device according to an embodiment of the invention.

### Detailed description of the drawings

The items shown in the figures are not drawn to scale.

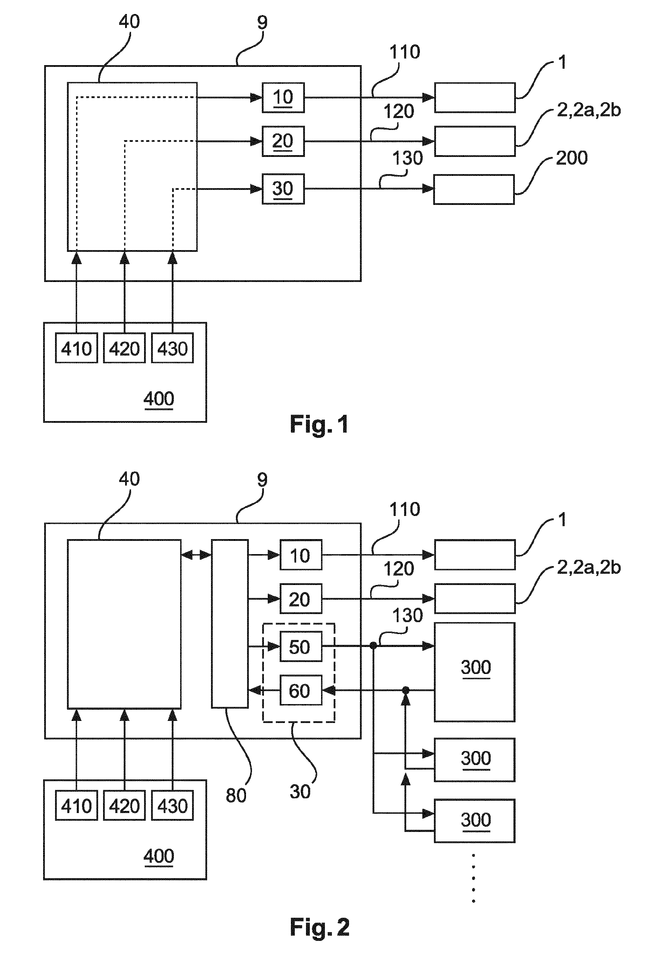

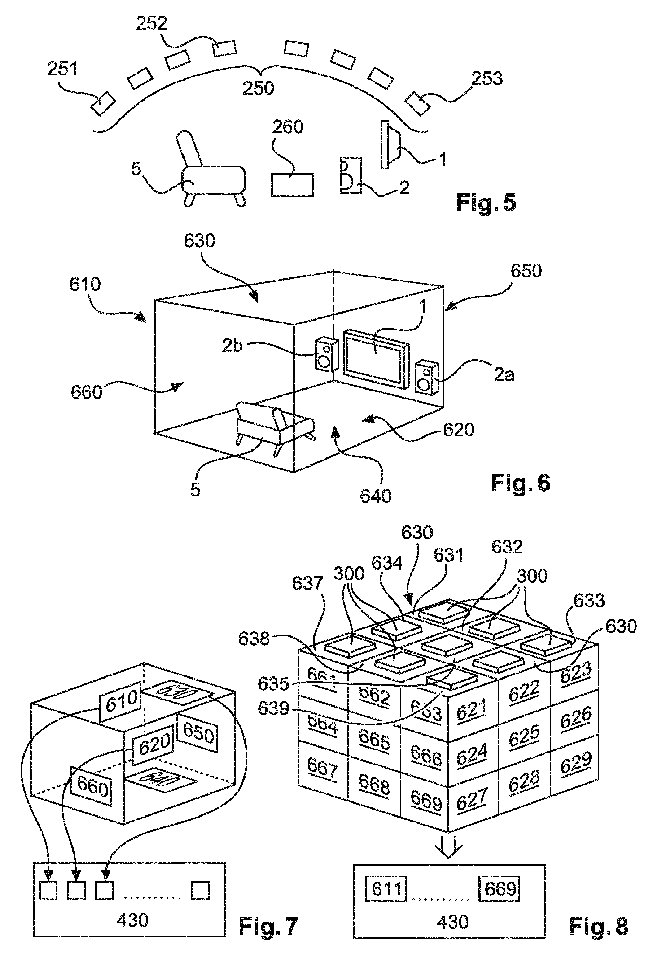

Fig. 1 shows an ambient surround information system 9 for a media presentation 400. The ambient surround information system 9 comprises a controller 40 and an optical ambient information interface 30. Furthermore, the ambient surround information system 9, which in the following is also referred to as system 9, comprises a video information interface 10 and an audio information interface 20. The controller 40 is adapted for controlling a first information channel 110 of a multimedia device 100 for video information on a first track 410 of the media presentation. The video information may be stored on a storage medium. The controller 40 is adapted for controlling a second information channel 120 of a multimedia device 100 for audio information on a second track 420 of the media presentation. Therein, the audio information may also be stored on a storage medium. The controller 40 is further adapted for controlling a third information channel 130 of a multimedia device 100 for optical ambient information on a third track 430 of the media presentation. The optical ambient information may also be stored on a storage medium. In particular, the video information, the audio information as well as the optical ambient information may be stored on different tracks 410, 420, 430 of the storage medium. The system may comprise a combined interface, wherein the combined interface is an HDMI-interface which includes the video information interface 10, the audio information interface 20 and the optical ambient information interface 30. The video information, the audio information and the optical ambient information can be provided to external devices via the combined interface. For example, the video information is provided to a television 1, the audio information is provided to loudspeakers 2, 2a, 2b. The loudspeakers may be part of a surround sound system. The optical ambient information is provided to an illumination device 200. In other words, the optical ambient information interface 30 is adapted to be coupled to the illumination device 200 of a multimedia device and is adapted for providing controlling information for a plurality of controllable illumination units which are not shown in Fig. 1. The illumination units of the illumination device 200 may locally be distributed in a multimedia environment, for example in a room or in a cinema. The multimedia environment will be explained in more detail with reference to Fig. 6. The controller 40 is adapted for controlling the third information channel 130 via the optical ambient information interface 30 based on the optical ambient information of the third track 430 of the media presentation 400. Thus, the optical ambient information may be a basis for individually controlling the illumination units of the illumination device 200 because the illumination units are controlled via the third information channel 130. The illumination device 200 can therefore be an adapter which can selectively be connected to the optical ambient information interface 30 via which the controlling information can be transferred or supplied to the illumination device 200 and thus also to the illumination units.

Fig. 2 shows an ambient surround information system 9 with a plurality of illumination devices 300 according to an embodiment of the invention. In particular, the ambient surround information system 9 is connected to three illumination devices 300 for which individual controlling signals, e.g. controlling information can be provided. The system 9 further comprises an illumination feedback interface 60 for receiving sensed illumination information from the illumination devices 300. In particular, the illumination feedback interface 60 is adapted to collect illumination information from each of the illumination devices 300 individually. Hence, the optical ambient information interface 30 may comprise a first interface 60 (also called feedback interface 60) for transmitting the sensed illumination information from the illumination devices 300 to a network controller 80, wherein the network controller 80 is integrated into the ambient surround information system 9 and is adapted to control the network of illumination devices 300. The network controller 80 may be adapted to control the illumination devices 300 individually. Therefore, the optical ambient information interface 30 may comprise a second interface 50 for transmitting controlling information from the network controller 80 to the different illumination devices 300. However, the controller 40 is adapted to control the third channel 130 via the optical ambient information interface 30 additionally based on the collected sensing information. It is possible that the controller 40 generates controlling information for controlling the illumination devices 300 and that the network controller adapts and adjusts the controlling information based on the sensed illumination information and then transmits the adjusted controlling information to the respective illumination devices 300.

The ambient surround information system may also be provided with coding/decoding facility. At least the ambient surround information, i.e. the third track of the multimedia presentation may underlay a ciphering, so that the ambient surround information may be provided as an added service. Further the ambient surround system may have a certified ambient surround information controller. The ambient surround information may be ciphered in a way that only certified controller can use the ambient surround information. In other words, the network controller 80 is adapted to communicate via the optical ambient information interface 30 and the illumination feedback interface 60 with a plurality of other illumination devices 300.

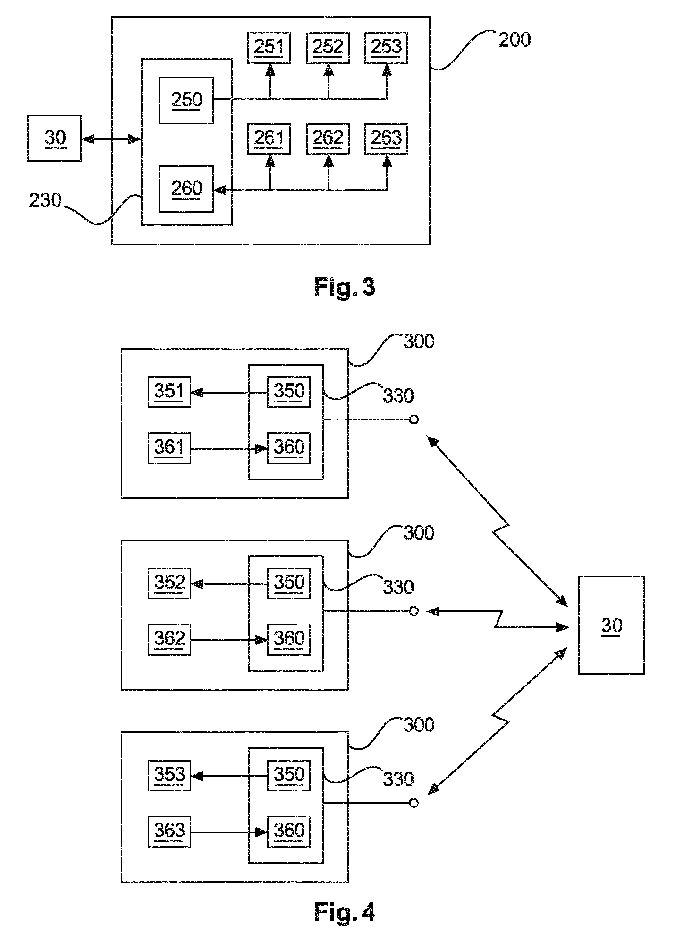

Fig. 3 shows an exemplary illumination device having at least one controllable illumination unit 251, 252, 253 and/or at least one illumination sensing unit 261, 262, 263. The ambient surround information system 9 is adapted to provide the sensed illumination information via the network controller 80 to said plurality of illumination devices 200 each having at least one controllable illumination unit 251, 252, 253 and/or at least one illumination sensing unit 261, 262, 263. It is possible that the controlling information can be provided to each of the controllable illumination units 251, 252, 253 of the illumination device 200 individually such that the different illumination units 251, 252, 253 can be separately controlled by means of the controlling information. The controlling information can be allocated to the different illumination units 251, 252, 253 by means of an illumination control device 250 which may be integrated into the illumination device 200. The sensed illumination information can be collected from the different illumination sensing units 261, 262, 263 by means of an illumination sensing device 260 which may also be integrated into the illumination device 200. Both illumination sensing device 260 and illumination control device 250 together form an optical ambient information interface 230 of the illumination device 200. This optical ambient information interface 230 of the illumination device 200 may be connected to the optical ambient information interface 30 of the ambient surround information system 9.

Fig. 4 shows three illumination devices 300 communicating with an optical ambient information interface 30 of the ambient surround information system 9. Each of the illumination devices 300 comprises an illumination unit 351, 352, 353 and an illumination sensing unit 361, 362, 363. The sensed illumination information from the illumination sensing units 361, 362, 363 are provided to respective illumination feedback interfaces 360. The sensed illumination information are provided via the illumination feedback interface 360 of each of the illumination devices 300 to the optical ambient information interface 30 of the ambient surround information system 9. However, the illumination feedback interface 360 may be part of the illumination device 300, in particular of an ambient information interface 330 of the illumination device 300. The ambient information interface 330 may further comprise an illumination control device 350 via which the illumination units 351, 352, 353 of the respective illumination devices 300 are controlled. A data transfer between the ambient information interface 330 of the illumination device 300 and the optical ambient information interface 30 of the ambient surround information system 9 may be conducted by means of a wireless data transfer or connection. Therefore, the ambient surround information system 9 can be a central unit receiving sensed illumination information from locally distributed illumination devices 300 and individually sending controlling information to the locally distributed illumination devices 300. The illumination device 300 may be provided in the form of an adapter which, for instance, can be flexibly placed inside a room or a multimedia environment. In particular, an arbitrary number of illumination devices 300 can be placed within the multimedia environment. The adapters, e.g. the illumination devices 300 may be detachably mounted for example on a wall, a floor or a ceiling of the room. Thus, it is possible to interchange the adapters. However, the adapters, e.g. the illumination devices 300 may be calibrated based on test information which is generated for example after a first installation. The test information may comprise sensed illumination information which indicates the illumination or light distribution within the room or within the multimedia environment. Preferably, the calibration of the illumination devices 300 may be conducted not only during a first calibration, but also during the operation of the illumination devices 300, for example if the light distribution is change due to an opening of a louver.

However, the ambient surround information system 9 is adapted to provide the sensed illumination information via the network controller 80 and via the optical ambient information interface 30 to the plurality of illumination devices 300 each having at least one illumination unit 351, 352, 353, an optical ambient information interface 330, an illumination sensing unit 361, 362, 363, an illumination feedback interface 360 and a network controller (not shown). In this manner, said plurality of illumination devices 300 can be controlled based on the sensed illumination information.

Fig. 5 shows a possible multimedia environment with an ambient surround information system 9. The multimedia environment comprises an armchair 5 for a TV viewer, a loudspeaker 2 and a television 1. For example the multimedia environment is arranged inside a room. The multimedia environment further comprises a plurality of illumination units 251, 252, 253 and an illumination control device 250 which is adapted to control the plurality of illumination units 251, 252, 253 based on sensed illumination information. The sensed illumination information can be provided by an illumination sensing device 260 which, in this case, is a central illumination sensing device 260 receiving the illumination or light distribution within the room such that this sensed illumination information is the basis for generating controlling information for the plurality of illumination units 251, 252, 253, wherein the controlling information are generated by the control device 250.

Fig. 6 shows ambient regions which correspond to the certain locations of the multimedia environment. The controller 40 of the ambient surround information system 9 is adapted for controlling the third information channel 130 via the optical ambient information interface 30 based on the optical ambient information for a plurality of ambient regions 610, 620, 630, 640, 650, 660 which are shown in Fig. 6. The ambient regions 610, 620, 630, 640, 650, 660 may be allocated to different locations of the multimedia environment, e.g. the room. The optical ambient information may include optical ambient information for at least six ambient regions 610, 620, 630, 640, 650, 660, wherein the ambient regions are arranged, seen from a the TV viewer sitting on the armchair 5, to the left, to the right, to the bottom, to the top, in the front and in the rear, so that the entire ambient has a cube like structure.

The illumination feedback interface 60 is capable of collecting sensed illumination information of the plurality of ambient regions 610, 620, 630, 640, 650, 660. The controller 40, however, is adapted to control the third channel 130 via the optical ambient information interface 30 additionally based on the collected sensing information of the plurality of ambient regions 610, 620, 630, 640, 650, 660.

Fig. 7 shows an allocation of collected sensing information of the plurality of ambient regions 610, 620, 630, 640, 650, 660 to the third track 430 of a storage medium. The sensed illumination information may be different for each of the ambient regions 610, 620, 630, 640, 650, 660 such that different illumination information is stored separately on the third track 430.

Fig. 8 shows an allocation of ambient sub-regions 611, 612,..., 669 to the third track 430 of a storage medium. In particular, each of the ambient regions 610, 620, 630, 640, 650, 660 shown in Fig. 7 includes at least nine ambient sub-regions 611, 612,..., 669 arranged in an at least 3x3 matrix. In this manner a higher resolution can be achieved when allocating sensed illumination information to the third track 430 of the storage medium. However, the collected sensed illumination information of the sub-regions 611, 612,..., 669 may be the basis for controlling the illumination devices 200, 300 within the multimedia environment, e.g. within the room. Therefore, the controller 40 is adapted to match a resolution of the optical ambient surround information to the available resolution of the illumination pixels, either by upscaling or downscaling the optical ambient surround information.

In case the resolution of the illumination device 200 or the plurality of illumination devices does not correspond to the provided ambient surround light information, the system may conduct an upscaling or downscaling, respectively. The sensed feedback may be used for the up- and downscaling. In other words, the system may adapt the controlling of the single illumination units to the available resolution as well as the actual distribution of the illumination units in the ambient regions. This may lead to situations, were in some regions an upscaling is necessary, and in other regions a downscaling is necessary. The system may inform the user how to re-position single illumination units in the room or space, to uniform the ambient illumination, and to reduce the upscale factor and the downscale factor at the same time by an assisted repositioning of illumination units.

In case the ambient of the multimedia system is also illuminated by other light sources, including daylight, the system may adapt the controlling of the illumination devices accordingly, based on the feedback information of units 260, 261, 262, 263 and 360, 361, 362, 363. The adaption may be carried our successively, so that the system may react on a changing situation of other illumination sources, e.g. a window during dusk and dawn.

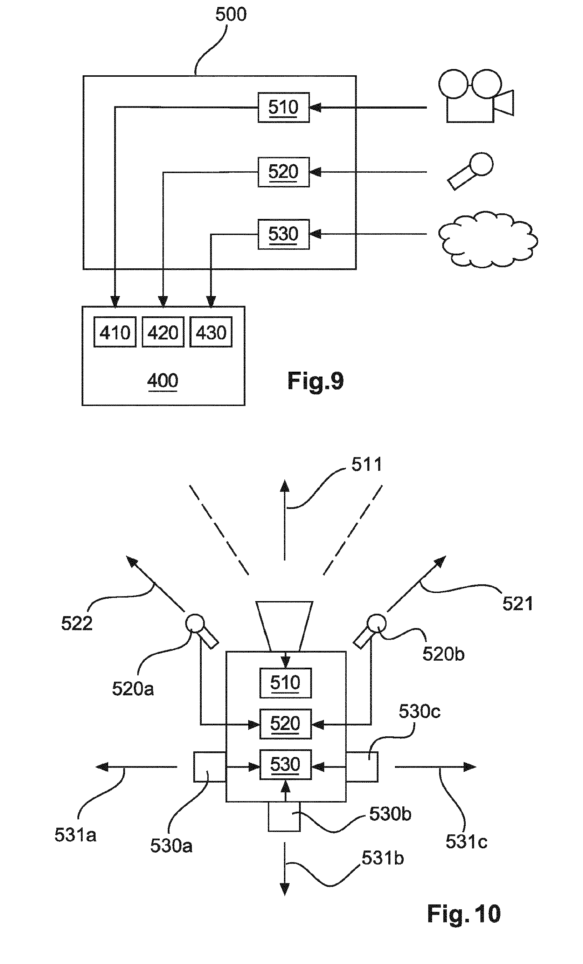

Fig. 9 shows an allocation or a storage of video information, audio information and optical ambient information to the respective tracks 410, 420, 430 of the storage medium. In particular, Fig. 9 shows how the different information is provided by a recording device 500 before it is stored on the storage medium. The recording device 500 comprises at least one video recording unit 510 having a predetermined recording direction 511 as shown in Fig. 10. It should be noted that also a plurality of recording directions may be used, for example when recording a 3D movie. The recording direction 511 may cover a view field in front of the recording unit 510. The recording unit may be a camera delivering image data from an environment, e.g. from the environment of a movie set. However, the recording unit 510 may also be a stereo camera.

Fig. 10 shows an exemplary recording device in a top view. The recording device 500 comprises at least one optical ambient surround information recording unit 530 having a predetermined recording direction 531. In particular, different recording directions 531a, 531b, 531c are indicated in Fig. 10. However, additional recording direction can also be covered by the recording device 500 in order to obtain optical ambient surround information. In particular, recording directions 531 may be arranged, seen from the recording device 500, to the left, to the right, to the bottom, to the top, to the front and to the rear, so that optical ambient surround information can be obtained from the entire environment around the recording device 500. An allocation of the recoding directions 531 to the ambient regions 610, 620, 630, 640, 650, 660 may also be conducted.

For recording the optical ambient surround information, the recording device 500 may further comprise a plurality of optical ambient surround information recording units 530a, 530b, 530c wherein each of the optical ambient surround information recording units 530a, 530b, 530c is adjusted with respect to the predetermined recording directions 531a, 531b, 531c as shown in Fig. 10. Furthermore, each of the optical ambient surround information recording units 530a, 530b, 530c is adapted to generate a respective optical ambient surround information of the media presentation 400 and to store the optical ambient surround information and the corresponding predetermined recording direction 531a, 531b, 531c of each of the optical ambient surround information recoding units 530a, 530b, 530c in the third information track 430 of the media presentation 400.

The recording device may further comprise at least one audio recording unit 520 having predetermined recording directions 521, 522. The audio recording unit 520 is adapted to generate an audio information of the media presentation 400 and to store the audio information in the second information track 420 of the media presentation 400. The audio recording unit 520 may comprise microphones 520a, 520b for receiving the audio information.

While the invention has been illustrated and described in detail in the drawings and the foregoing description, such illustration and description are to be considered illustrative and exemplary and not restrictive; the invention is not limited to the disclosed embodiments. Other variations to the disclosed embodiments can be understood and effected by those skilled in the art and practicing the claimed invention, from a study of the drawings, the disclosure, and the appended clams. In the claims the term "comprising" does not exclude other elements, and the indefinite article "a" or "an" does not exclude a plurality. The mere fact that certain measures are recited in mutually different dependant claims does not indicate that a combination of these measures cannot be used to advantage. Any reference signs in the claims should not be construed as limiting the scope of protection.

### List of reference signs:

- 1: television
- 2: loudspeaker
- 2a: first loudspeaker
- 2b: second loudspeaker
- 5: armchair
- 9: ambient surround information system 9
- 10: video information interface
- 20: audio information interface
- 30: optical ambient information interface
- 40: controller
- 50: second interface
- 60: illumination feedback interface; first interface
- 80: network controller
- 100: multimedia device
- 110: first information channel
- 120: second information channel
- 130: third information channel
- 200: illumination device
- 230: optical ambient information interface
- 260: illumination sensing device
- 300: illumination device
- 330: optical ambient information interface
- 360: illumination feedback interface
- 251...253: illumination unit
- 261...263: illumination sensing unit
- 351...353: illumination unit
- 361...363: illumination sensing unit
- 610...660: ambient region
- 611...669: ambient sub-region
- 400: media presentation
- 410: first track
- 420: second track
- 430: third track
- 500: recording device
- 510: video information recording unit
- 511: recording direction
- 520: audio recording unit
- 521: recording direction
- 530: ambient surround information recording unit
- 530a...530c: ambient surround information
- 531: recording direction
- 531a...531c: recording direction

## Claims

1. Ambient surround information system for a media presentation (400), the system (9) comprising:
a controller (40), and
an optical ambient information interface (30),
wherein the controller (40) is adapted for controlling:
a first information channel (110) of a multimedia device (100) for video information on a first track (410) of the media presentation,
a second information channel (120) of a multimedia device (100) for audio information on a second track (420) of the media presentation,
a third information channel (130) of a multimedia device (100) for optical ambient information on a third track (430) of the media presentation,
wherein the optical ambient information interface (30) is adapted to be coupled to an illumination device (200, 300) of a multimedia device and is adapted for providing controlling information for a plurality of controllable illumination units (251, 252, 253; 351, 352, 353) of said illumination device,
wherein the controller (40) is adapted for controlling the third information channel (130) via the optical ambient information interface (30) based on the optical ambient information of the third track (430) of the media presentation (400).

2. Ambient surround information system according to claim 1, wherein the controller (40) is adapted for controlling the third information channel (130) via the optical ambient information interface (30) based on the optical ambient information for a plurality of ambient regions (610, 620, 630, 640, 650, 660).

3. Ambient surround information system according to any one of claims 1 and 2, wherein the optical ambient information relates to a meaning content of the media presentation (400).

4. Ambient surround information system according to any one of claims 1 to 3, wherein the system (9) comprises an illumination feedback interface (60) for an illumination sensing device (260, 360), wherein the illumination feedback interface is capable of collecting sensed illumination information of a plurality of ambient regions (610, 620, 630, 640, 650, 660), wherein the controller (40) is adapted to control the third channel (130) via the optical ambient information interface (30) additionally based on the collected sensing information.

5. Ambient surround information system according to claim 4, wherein the ambient surround information system (9) further comprises a network controller (80), wherein the network controller is adapted to communicate via the optical ambient information interface (30) and the illumination feedback interface (60) with a plurality of other illumination devices (300), wherein the ambient surround information system (9) is adapted to provide the sensed illumination information via the network controller (80) to said plurality of illumination devices (300) each having at least one illumination unit (351, 352, 353), an optical ambient information interface (330), an illumination sensing unit (361, 362, 363), an illumination feedback interface (360) and a network controller, and to control said plurality of illumination devices (300) based on the sensed illumination information.

6. Ambient surround information system according to any one of claims 1 to 5, wherein the optical ambient information includes optical ambient information for at least six ambient regions (610, 620, 630, 640, 650, 660), wherein the ambient regions are arranged, seen from a user, to the left, to the right, to the bottom, to the top, in the front and in the rear, so that the entire ambient has a cube like structure.

7. Ambient surround information system according to any one of claims 2 to 6, wherein each of the ambient regions (610, 620, 630, 640, 650, 660) includes at least nine ambient sub-regions (611, 612,..., 669) arranged in an at least 3x3 matrix.

8. Ambient surround information system according to any one of claims 1 to 7, wherein the controller (40) is adapted to match a resolution of the optical ambient surround information to the available resolution of illumination units, either by upscaling or downscaling the optical ambient surround information.

9. Illumination device comprising:
a plurality of controllable illumination units (251, 252, 253) and
an optical ambient information interface (230),
wherein the optical ambient information interface is adapted to receive controlling information for the plurality of controllable illumination units from an ambient surround information system (9) according to any one of claims 1 to 8,
wherein the illumination device (200) is adapted to control the plurality of illumination units based on the controlling information received from the ambient surround information system (9) according to any one of claims 1 to 8.

10. Illumination device according to claim 9, wherein the illumination device comprises:
at least one sensing device (261, 262, 263), and
n illumination feedback interface (260),
wherein the sensing device is adapted for sensing illumination information of a plurality of ambient regions (610, 620, 630, 640, 650, 660),
wherein the illumination feedback interface is adapted to provide the sensed illumination information to the ambient surround information system according to any one of claims 1 to 8 so as to allow the ambient surround information system (9) to control the plurality of illumination units (251, 252, 253) based on the sensed illumination information.

11. Illumination device comprising:
at least one controllable illumination unit (351),
an optical ambient information interface (330),
an illumination sensing unit (361),
an illumination feedback interface (360), and
a network controller,
wherein the network controller is adapted to communicate via the optical ambient information interface and the illumination feedback interface with ambient surround information system (9) of any one of claims 1 to 8 and other illumination devices (300),
wherein the optical ambient information interface (330) is adapted to receive controlling information for the at least one controllable illumination unit (351) from an ambient surround information system (9) of any one of claims 1 to 8,
wherein the illumination sensing unit (361) is adapted for sensing illumination information of at least one ambient region (610, 620, 630, 640, 650, 660) allocated to the respective one of the at least one controllable illumination unit (351),
wherein the illumination feedback interface (360) is adapted to provide the sensed illumination information to an ambient surround information system (9) according to any one of claims 1 t 8 and other illumination devices (300) having at least one illumination unit (352, 353), an optical ambient information interface (330), an illumination sensing unit (361, 362), an illumination feedback interface (360) and a network controller so as to allow an ambient surround information system (9) according to any one of claims 1 to 8 to control a plurality of illumination devices (300) based on the sensed illumination information,
wherein the illumination device (300) is adapted to control the at least one illumination unit (351) based on the received controlling information from the ambient surround information system according to any one of claims 1 to 8 and on received illumination sensing information and from the other illumination devices (300).

12. Recording device for recording a media presentation (400) for an ambient surround information system, the recording device (500) comprising:
at least one video recording unit (510) having a predetermined recording direction (511),
at least one optical ambient surround information recording unit (530) having a predetermined recording direction (531), wherein the predetermined recording direction of the optical ambient surround information recording unit is different from the predetermined recording direction of the video recording unit,
wherein the video recording unit (510) is adapted to generate a video information of the media presentation and to store the video information in a first information track (410) of the media presentation,
wherein the optical ambient surround information recording unit (530) is adapted to generate an optical ambient surround information of the media presentation (400) and to store the optical ambient surround information and the predetermined recording direction (531) in a third information track (430) of the media presentation (400).

13. Recording device according to claim 12, wherein the recording device (500) further comprises at least one audio recording unit (520) having a predetermined recording direction (521), wherein the audio recording unit is adapted to generate an audio information of the media presentation (400) and to store the audio information in a second information track (420) of the media presentation.

14. Recording device according to any one of claims 12 and 13, wherein the recording device (500) further comprises a plurality of optical ambient surround information recording units (530a, 530b, 530c) each having a predetermined recording direction (531a, 531b, 531c), wherein each of the optical ambient surround information recording units is adapted to generate a respective optical ambient surround information of the media presentation (400) and to store the optical ambient surround information and the corresponding predetermined recording direction (531a, 531b, 531c) of each of the optical ambient surround information recoding units (530a, 530b, 530c) in the third information track (430) of the media presentation (400).

15. Recording device according to any one of claims 12 to 14, wherein the optical ambient surround information of the third track (430) of the media presentation (400) is coded so as to provide an added value pay service.
